# EUROPEAN PATENT APPLICATION

(11) **EP 1 486 297 A1**
(43) Date of publication of application: **15.12.2004**
(21) Application number: 04253403.2
(22) Date of filing: 08.06.2004
(51) Int. Cl.: B25H 3/00, A45F 5/02

(54) **Locking an implement**

(30) Priority: 10.06.2003 GB 0313329
(71) Applicant: Meads, Richard James, Taunton, Somerset, TA3 7SN (GB); Lemm, John Richard, Taunton, Somerset, TA2 7BL (GB)
(72) Inventor: Lemm, John Richard, Taunton Somerset TA2 7BL (GB)
(74) Representative: Calderbank, Thomas Roger

(57) **Abstract**

In order to lock an implement to a belt, a locking system is provided having a main pin fixed to the belt, the main pin having a first groove therein, and a casing rotatably mounted on the main pin, the outer casing having a locating hole therein. The implement is thus locked to the belt by aligning the locating hole with the first groove;
inserting a male pin to which the implement is attached into the locating hole to a position in which a second groove in the male pin is aligned with the first groove in the main pin; and
rotating the male pin relative to the main pin such as to rotate the outer casing, until the second groove is not aligned with the first groove, whereby the male pin is held by the main pin in the casing, thereby to lock the implement to the belt.

## Description

The present invention relates to a method of locking an implement to a belt, and to an implement attachment apparatus.

It is well known to attach implements such as tools to the belt of the user using a hook, or other connection which permits the tool to be attached to, and disengaged from, the belt if the user wishes. Such arrangements suffer from the disadvantage that the tools are not securely locked to the belt. More complex arrangements, which lock the tool to the belt, are also know, but the known locking arrangements generally require the use of both hands to lock or unlock the tool. They are therefore inconvenient to use.

Therefore, according to the first aspect of the present invention there is provided a method of locking an implement to a belt using a locking system comprising a main pin fixed to the belt, the main pin having a first groove therein, and a casing rotatably mounted on the main pin, the outer casing having a locating hole therein,
wherein the method comprises;
aligning the locating hole with the first groove;
inserting a male pin to which the implement is attached into the locating hole to a position in which a second groove in the male pin is aligned with the first groove in the main pin; and
rotating the male pin relative to the main pin such as to rotate the outer casing, until the second groove is not aligned with the first groove, whereby the male pin is held by the main pin in the casing, thereby to lock the implement to the belt.

With such an arrangement, the user inserts the male pin, with the tool attached, into the locating hole in the casing, and the male pin is then rotated relative to the main pin. Since the male pin is in the casing, the casing also rotates. This rotation operation may be carried out by the user, or may occur under gravity due to the weight of the implement. As the male pin rotates relative to the main pin, the groove in the main pin and the groove in the male pin go out of alignment and part of the main pin then fills the groove in the male pin, to prevent the male pin being withdrawn from the locating hole. The tool is thus locked in place.

It should be noted that the rotation of the male pin is not rotation about its elongate access, it is relative to the main pin.

It is convenient if the direction of insertion of the male pin is perpendicular to the access of the main pin. This simplifies the shaping of the grooves.

According to a second aspect of the present invention there is provided a method of locking an implement to a fixed stability plate using a locking system comprising a main pin fixed to the stability plate, the main pin having a first groove therein, and a casing rotatably mounted on the main pin, the outer casing having a locating hole therein,
wherein the method comprises;
aligning the locating hole with the first groove;
inserting a male pin to which the implement is attached into the locating hole to a position in which a second groove in the male pin is aligned with the first groove in the main pin; and
rotating the male pin relative to the main pin such as to rotate the outer casing, unitl the second groove is not aligned with the first groove, whereby the male pin is held by the main pin in the casing, thereby to lock the implement to the stability plate

According to a fourth aspect of the invention there is provided an implement attachment apparatus comprising;
a belt;
a main pin fixed to the belt, the main pin having a first groove therein;
a casing rotatably mounted on the main pin, the outer casing having a locating hole therein alignable with the first groove when the main pin and the casing are in a first position; and
a male pin attachable to the implement, the male pin having a second groove therein;
wherein the male pin is insertable into the locating hole to a position in which the second groove is aligned with the first groove when the main pin and the casing are in the first position, and the male pin and the casing are rotatable relative to the main pin when the male pin is in the locating hole to cause the first and second groove to become unaligned.

According to a third aspect of the present invention there is provided an implement attachment apparatus comprising;
a fixed stability plate;
a main pin fixed to the stability plate, the main pin having a first groove therein;
a casing rotatably mounted on the main pin, the outer casing having a locating hole therein alignable with the first groove when the main pin and the casing are in a first position; and
a male pin attachable to the implement, the male pin having a second groove therein;
wherein the male pin is insertable into the locating hole to a position in which the second groove is aligned with the first groove when the main pin and the casing are in the first position, and the male pin and the casing are rotatable relative to the main pin when the male pin is in the locating hole to cause the first and second groove to become unaligned.

An embodiment of the invention will now be described in detail by way of example, with reference to the accompanying drawings, in which;

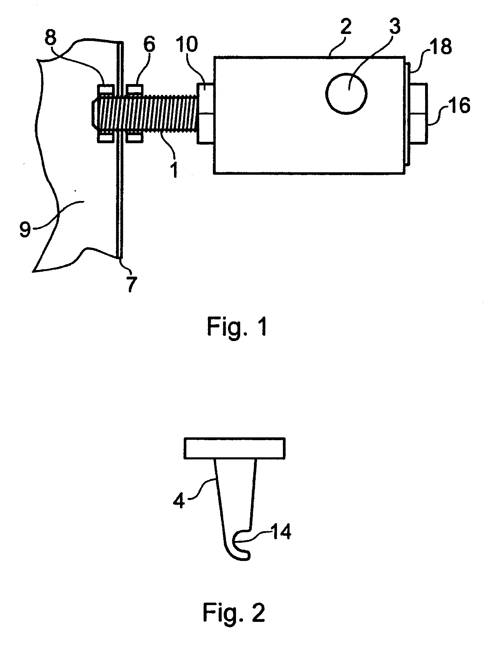

Fig. 1 shows a side view of the assembled unit.
Fig. 2 is a section showing male locating pin.

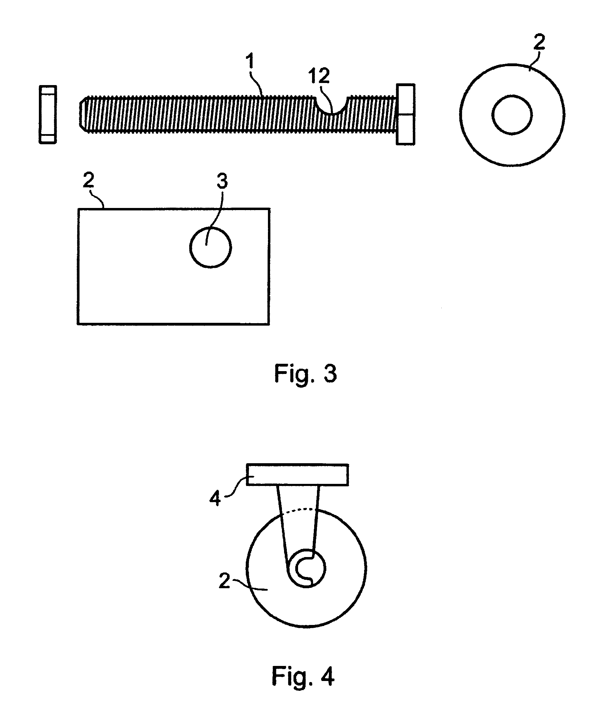

Fig. 3 shows the unassembled main pin and the outer casing; and
Fig. 4 shows a cross-section of the male pin inserted through the locating hole.

In the embodiment of the present invention a main pin 1 is attached to a stability plate 7 and locked thereto by locking nuts 6, 8. The stability plate 7 fixes the main pin 1 to a belt (not shown).

The locking device has a main pin 1 having a groove 12, which is fitted within an outer casing 2. The outer casing 2 has a locating hole 3, and can be rotated about the main pin 1, and the outer-casing 2 is held between a bolt-head 16 of the fixed main pin 1, via a washer 18 and a locking nut 10. The locking nut 10 can be used to alter the friction experienced by the outer-casing 2, so as to adjust the force required to rotate the outer-casing 2. The main pin 1 is locked to the stability plate 7 by the locking nuts 6 and 8, and is in a fixed position relative to a belt.

By rotation of the outer casing 2, the groove 12 of the main pin 1 aligns with the locating hole 3 of the outer casing 2 at a predefined point. In this position it is possible to insert male pin 4 through the locating hole 3 of the outer casing, so that it is received in the groove 12 of main pin 1. The male pin 4 also has a groove 14, so that when the groove 12 of the main pin 1 and the groove 14 of the male pin 4 are aligned, the outer casing can be rotated, and the outer casing 2 and the male pin 4 rotate about the long axis of the main pin 1. The interaction of the body of main pin 1 and the groove 14 of male pin 4 prevent the removal of the male pin 4. To release the male pin 4, the outer casing 2 and the male pin 4 must be rotated to the same point at which the groove 12 of the main pin 1 and the location hole 3 of the outer casing 2 are realigned, and the male pin 4 can be moved axially and thus removed from the groove 12, and the locating hole 3.

## Claims

1. A method of locking an implement to a belt using a locking system comprising a main pin fixed to the belt, the main pin having a first groove therein, and a casing rotatably mounted on the main pin, the outer casing having a locating hole therein,
wherein the method comprises;
aligning the locating hole with the first groove;
inserting a male pin to which the implement is attached into the locating hole to a position in which a second groove in the male pin is aligned with the first groove in the main pin; and
rotating the male pin relative to the main pin such as to rotate the outer casing, until the second groove is not aligned with the first groove, whereby the male pin is held by the main pin in the casing, thereby to lock the implement to the belt.

2. A method of locking an inplement to a fixed stability plate using a locking system comprising a main pin fixed to the stability plate, the main pin having a first groove therein, and a casing rotatably mounted on the main pin, the outer casing having a locating hole therein,
wherein the method comprises;
aligning the locating hole with the first groove;
inserting a male pin to which the implement is attached into the locating hole to a position in which a second groove in the male pin is aligned with the first groove in the main pin; and
rotating the male pin relative to the main pin such as to rotate the outer casing, until the second groove is not aligned with the first groove, whereby the male pin is held by the main pin in the casing, thereby to lock the implement to the stability plate.

3. A method according to claim 1 or claim 2, wherein the direction of insertion of the male pin is perpendicular to the axis of the main pin.

4. An implement attachment apparatus comprising;
a belt;
a main pin fixed to the belt, the main pin having a first groove therein;
a casing rotatably mounted on the main pin, the outer casing having a locating hole therein alignable with the first groove when the main pin and the casing are in a first position; and
a male pin attachable to the implement, the male in having a second groove therein;
wherein the male pin is insertable into the locating hole to a position in which the second groove is aligned with the first groove when the main pin and the casing are in the first position, and the male pin and the casing are rotatable relative to the main pin when the male pin is in the locating hole to cause the first and second groove to become unaligned.

5. An apparatus according to claim 4, wherein the main pin is attached to the belt via a stability plate.

6. An implement attachment apparatus comprising;
a fixed stability plate;
a main pin fixed to the stability plate, the main pin having a first groove therein;
a casing rotatably mounted on the main pin, the outer casing having a locating hole therein alignable with the first groove when the main pin and the casing are in a first position; and
a male pin attachable to the implement, the male pin having a second groove therein;
wherein the male pin is insertable into the locating hole to a position in which the second groove is aligned with the first groove when the main pin and the casing are in the first position, and the male pin and the casing are rotatable relative to the main pin when the male pin is in the locating hole to cause the first and second groove to become unaligned.

7. An apparatus according to any one of claims 4 to 6, where in the casing is rotatable through 360°on the main pin.

8. An apparatus according to any one of claims 4 to 7, wherein the main pin is a belt, and the casing is held between a head of the bolt and the nut of on bolt.

9. A method of attaching an implement to a belt substantially as any one herein described with reference to the accompanying drawings.
